Europäisches Patentamt

European Patent Office

Office européen des brevets

(19)

(11) Veröffentlichungsnummer : **0 181 656**
**B1**

(12) EUROPÄISCHE PATENTSCHRIFT

(45) Veröffentlichungstag der Patentschrift :
20.01.88

(51) Int. Cl.⁴ : **B 01 D 13/00**

(21) Anmeldenummer : **85201636.9**

(22) Anmeldetag : **09.10.85**

(54) Einrichtung zur Trennung von Flüssigkeitsgemischen durch Pervaporation.

(30) Priorität : **10.11.84 DE 3441190**

(43) Veröffentlichungstag der Anmeldung :
**21.05.86 Patentblatt 86/21**

(45) Bekanntmachung des Hinweises auf die Patenterteilung : **20.01.88 Patentblatt 88/03**

(84) Benannte Vertragsstaaten :
**AT BE CH DE FR GB IT LI NL SE**

(56) Entgegenhaltungen :
**EP-A- 0 118 760**
**DE-A- 3 206 864**
**FR-A- 1 562 291**
**US-A- 3 367 787**

(73) Patentinhaber : **METALLGESELLSCHAFT AG**
**Reuterweg 14 Postfach 3724**
**D-6000 Frankfurt/M.1 (DE)**

(72) Erfinder : **Sander, Ulrich, Dr.**
**Taunusstrasse 116**
**D-6382 Friedrichsdorf (DE)**

(74) Vertreter : **Rieger, Harald, Dr.**
**Reuterweg 14**
**D-6000 Frankfurt am Main (DE)**

EP 0 181 656 B1

## Beschreibung

Die Erfindung bezieht sich auf eine Einrichtung zur Trennung von Flüssigkeitsgemischen durch Pervaporation, mit einer Mehrzahl nach Art der Filterpressen oder Plattenwärmetauscher zusammengesetzter flächiger Bauteile, wobei jede Pervaporator-Einheit aus einer Rohmediumkammer und einer davon mittels dampfdurchlässiger Membran abgetrennter Permeatkammer besteht.

Bei der Pervaporation werden Flüssigkeitsgemische auf eine Membran geleitet, die für eine oder mehrere Komponenten des Gemisches eine wesentlich höhere Durchlässigkeit besitzt, als für die anderen Komponenten. Eine Komponente mit höherer Löslichkeit und günstigeren Diffusionseigenschaften in der Membranmatrix durchdringt die Membran (Permeat) und kann auf der Rückseite als Dampf abgezogen werden, während eine Komponente mit geringerer Löslichkeit bzw. ungünstigeren Diffusionseigenschaften zurückgehalten wird (Retentat).

Auf diese Weise können in vielen Fällen Trennwirkungen erzielt werden, die mit anderen Methoden gar nicht oder nur mit erheblich höherem Aufwand möglich sind. So ist beispielsweise in der US-PS 4 405 409 vorgeschlagen worden, die Entwässerung von Mischungen aus organischen Flüssigkeiten und Wasser so vorzunehmen, daß der Wassergehalt zuerst durch Destillation und anschließend weiter durch Pervaporation herabgesetzt wird.

Die Trennwirkung von Membranen bei der Pervaporation ist schon lange bekannt, ohne daß es bisher zu einer nennenswerten industriellen Anwendung gekommen wär. Das liegt u. a. daran, daß die für Pervaporationsverfahren entwickelten Vorrichtungen zu aufwendig und/oder nicht ausreichend betriebssicher sind. Außer in Wickeltechnik aufgebauten Trennvorrichtungen und eine ebenso in Plattenbauweise aufgebaute Einrichtung zur Trennung von Lösungen durch Pervaporation (siehe EP-A-0 118 760), sind solche der eingangs genannten Art vorgeschlagen worden (vergl. DE-AS 29 02 247, DE-OS 32 19 869 und DE-OS 33 03 910). Es handelt sich dabei um ein Konstruktionsprinzip, wie es u. a. für Filterpressen oder Plattenwärmetauscher bekannt ist. Im wesentlichen gleichartige flächige Bauteile sind zu einem Stapel verbunden, in dem durch entsprechende Anordnung von Bohrungen und Dichtungen auch schon alle erforderlichen Verbindungskanäle integriert sind. Soweit ersichtlich, sind die bekannten, einschlägigen Einrichtungen bisher nicht in industriellem Maßstab eingesetzt worden. Bei Ausführungen in Kunststoff, dürften die Hauptprobleme darin liegen, daß die flächigen Bauteile bei größeren Abmessungen nicht mit den geforderten engen Toleranzen zu fertigen sind, daß der Werkstoff keine ausreichende Dauerstandfestigkeit besitzt und unter den zur Erzielung einer befriedigenden Dichtigkeit erforderlichen hohen äußeren Drücken der Zuganker zum Fließen neigt.

Ausführungen in Metall werden bisher offenbar deswegen nicht benutzt, weil sie in der Herstellung zu teuer oder nicht ausreichend korrosionsbeständig sind. Außerdem sind Anpassungen an unterschiedliche Funktionen nicht so ohne weiteres möglich, wodurch eine Integration wie bei der gattungsbildenden Einrichtung, schwierig ist.

Es besteht somit die Aufgabe, eine Einrichtung der eingangs genannten Art weiterzubilden und dabei die genannten Nachteile bekannter Einrichtungen zu vermeiden. Insbesondere soll eine wirtschaftlich günstig herstellbare und an unterschiedliche Anwendungsfälle flexibel anpaßbare Einrichtung geschaffen werden.

Zur Lösung dieser Aufgabe wird eine Einrichtung zur Trennung von Flüssigkeitsgemischen durch Pervaporation vorgeschlagen, die außer durch die eingangs erwähnten Merkmale dadurch gekennzeichnet ist, daß 2 bis 300 Pervaporator-Einheiten zu einem Modul parallel geschaltet sind, dem Modul ein in gleicher Bauweise ausgeführter Kondensator zugeordnet ist und daß Modul und Kondensator in an sich bekannter Weise unter Zwischenlage geeigneter Dichtungen und Ausbildung randseitiger Verbindungs-, Zu- und Abfuhrkanälen mittels Abdeckplatten und Zugankern zu einer Baueinheit verbunden sind.

Weiterbildungen und Details sind in den Unteransprüchen 2 bis 7 beschrieben.

Die erfindungsgemäße Einrichtung enthält die wichtigsten bei der Pervaporation erforderlichen Apparate in einer kompakten Baueinheit, die als solche gehandhabt, transportiert und ohne großen Montageaufwand überall kurzfristig in Betrieb genommen werden kann. Sie läßt sich durch Variation der Zahl der Pervaporator-Einheiten, bzw. der Anzahl der Kammern bei dem Kondensator sehr flexibel an alle vorkommenden Anwendungsfälle anpassen. Insbesondere aber erlaubt die Verwendung standardisierter, handelsüblicher Platinen eine sehr wirtschaftliche Herstellung.

Weitere Einzelheiten und Vorteile werden anhand der in den Figuren dargestellten Ausführungsbeispiele näher erläutert.

Figur 1 zeigt stark schematisiert eine Baueinheit gemäß der Erfindung.

Figur 2 zeigt als Schaltbild eine erfindungsgemäße Einrichtung mit mehreren Modulen.

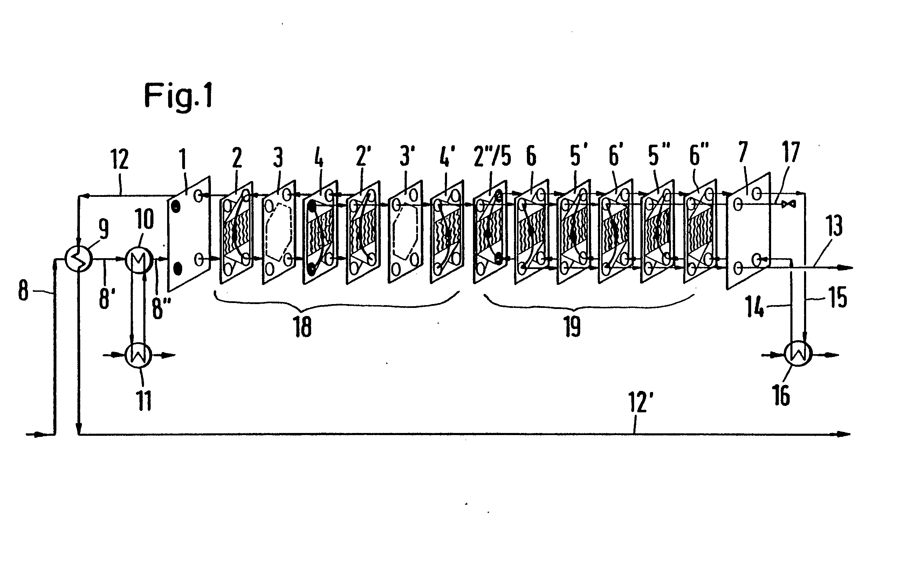

Die Baueinheit gemäß Figur 1 besteht aus den flächigen Bauteilen 1 bis 7, deren konstruktive Ausbildung im Prinzip von Filterpressen oder Plattenwärmetauschern bekannt ist. Dabei bilden in der Regel zwei nebeneinanderliegende Platinen unter Zwischenlage von Dichtungen eine geschlossene Kammer, in die über randseitige Verbindungskanäle flüssige oder gasförmige Medien zu- und abgeführt werden können. Bei Wärmetauschern enthalten nebeneinanderliegende Kammern abwechselnd ein wärmeaufnehmendes und ein wärmeabgebendes Medium mit der die Kammern voneinander trennenden Platine als Wärmeübertragungsfläche. Bei Pervaporatoren ist die von zwei Platinen gebildete Kammer durch eine Membran unterteilt, wobei sich in der einen Teilkammer das Rohgemisch bzw. das mehr oder weniger aufkonzentrierte Retentat befindet und in der anderen Teilkammer das dampfförmige Permeat. Zu- und Abfuhr der Medienströme erfolgt auch hier über die randseitig vorhandenen Verbindungskanäle.

Im einzelnen sind in Figur 1 die endseitigen Abdeckplatten 1 und 7 der Baueinheit dargestellt, zwischen denen in zusammengebautem Zustand die Platinen 2 bis 6 mittels nicht dargestellter Zuganker und unter Zwischenlage geeigneter Dichtungen derartig eingespannt sind, daß die Baueinheit sowohl nach außen absolut abgedichtet ist, als auch im Innern zuverlässig gegeneinander abgedichtete Kanalsysteme für die einzelnen Medien aufweist.

In Figur 1 bilden die Platine 2 und die Membran 3 eine Rohmediumkammer, während die Membran 3 und die Platine 2′ eine Permeatkammer umschließen. Die Platine 4 ist im eigentlichen Nutzbereich perforiert. Sie hat hier keine raumtrennende Funktion, sondern dient lediglich zur Abstützung der Membran 3.

Die Platine 2′ bildet gleichzeitig die erste Kammerwand der nächsten Pervaporationseinheit, zu der noch die Membran 3′, die Stützplatine 4′ sowie die Platine 2″/5 gehören.

Es bedarf keiner weiteren Erläuterung, daß die Bauteile 2,3,4 je nach Einsatzzweck des Pervaporators mehr oder weniger oft wiederholt zu einem Modul 18 angeordnet werden.

Die Platine 2″/5 bildet einerseits die letzte Wand 2″ des Pervaporators 18 und andererseits die erste Wand 5 des Kondensators 19, in dem Kondensationskammern (zwischen 5 und 6, 5′ und 6′ usw.) sowie Kühlkammern (zwischen 6 und 5′, 6′ und 5″ usw.) im Wechsel angeordnet sind. Auch bei einem Kondensator ist selbstverständlich die Anordnung einer größeren Anzahl von Kammern möglich, als in Figur 1 dargestellt ist.

Zur Trennung von Flüssigkeitsgemischen wird der in Figur 1 dargestellten Baueinheit über eine Leitung 8,8′,8″ Rohgemisch zugeführt, das zuvor durch das über die Leitung 12 abströmende Produkt in einem Rekuperator 9 und mittels geschlossenem Heizkreislauf 10,11 auf die erforderliche Temperatur gebracht worden ist. Das Rohgemisch wird dann über einen Verbindungskanal in die parallel geschalteten Rohmediumkammern (zwischen 2 und 3 bzw. 2′ und 3′) eingeleitet, aus denen das Permeat durch die Membranen 3,3′ in die Permeatkammern (Zwischen 3 und 2′ bzw. 3′ und 2″/5) übertritt. Durch einen zweiten Verbindungskanal wird das Retentat, d. h. das Produkt bzw. das aufkonzentrierte Rohgemisch aus den Rohmediumkammern und schließlich mittels Leitung 12 abgeführt, während das Permeat über einen dritten Verbindungskanal in den Kondensator 19 überströmt.

Der Kondensator 19 wird von einem, in einem geschlossenen Kreislauf (Leitungen 14,15) über eine Rückkühler 16 geführten Kühlmedium durchströmt, wobei in Figur 1 insgesamt drei parallel geschaltete Kühlkammern, die von den Platinen 6 und 5′, 6′ und 5″ bzw. 6″ und 7 gebildet werden, dargestellt sind. Sie wechseln mit einer gleichen Anzahl von Kondensationskammern ab (zwischen 5 und 6, 5′ und 6′ sowie 5″ und 6″).

Über die Leitung 13 wird das kondensierte Permeat abgezogen, während zur Aufrechterhaltung des Unterdrucks in den Kondensatkammern über die Leitung 17 nicht kondensierbare Bestandteile mittels Vakuumpumpe abgeführt werden. Das Produkt (bzw. ein aufkonzentriertes Rohgemisch) verläßt die Baueinheit über die Leitung 12′, nachdem es zuvor im Rekuperator 9 durch frisches Rohgemisch abgekühlt worden ist.

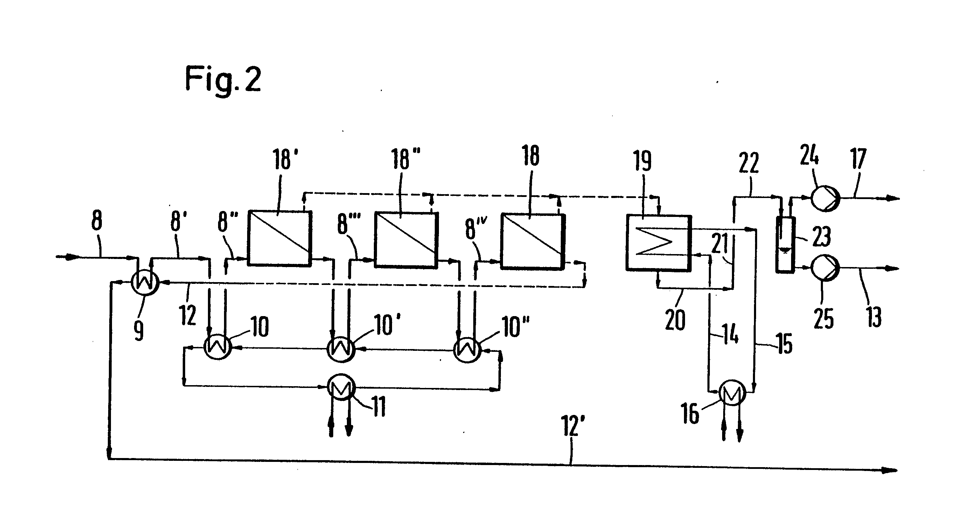

In Figur 2 ist ein Schaltbild für mehrere Module dargestellt, wobei die Module 18′ und 18″ je nach Anwendungsfall entweder als Vorschaltmodule zu der Baueinheit aus Modul 18 und Kondensator 19 angeordnet oder aber mit der gesamten Baueinheit aus 18 und 19 zu einer Gesamt-Baueinheit vereinigt werden können.

Das Rohgemisch wird über die Leitungen 8, 8′, 8″ zugeführt, im Rekuperator 9 und im Wärmetauscher 10 aufgeheizt, im Modul 18′ in einer ersten Stufe aufkonzentriert, im Wärmetauscher 10′ wieder aufgeheizt, über die Leitung 8′″ in den Modul 18″ eingeführt und dort weiter aufkonzentriert und strömt schließlich nach erneuter Aufwärmung im Wärmetauscher 10″ über die Leitung 8′ zur Endkonzentrierung in den Modul 18.

Das Produkt verläßt die Einrichtung über die Leitung 12 und 12′ und wird dabei im Rekuperator 9 durch frisches Rohgemisch gekühlt. Die Wärmetauscher 10,10′ und 10″ liegen in einem geschlossenen Kreislauf, dessen Wärmeträgermittel im Wärmetauscher 11 aufgeheizt wird.

Der Kondensator 19 wird kühlmittelseitig ebenfalls über einen geschlossenen Kreislauf (Leitungen 14,15) beaufschlagt, wobei das umlaufende Wärmeträgermittel im Kühler 16 rückgekühlt wird.

Im Anschluß an den untenliegenden Kondensatauslauf 20 ist ein Steigrohr 21, ein obenliegender Rohrbogen 22 und ein gekühltes Fallrohr 23 angeschlossen. Diese Anordnung kann dann von Vorteil sein, wenn die sonst übliche Anordnung einer Zulaufstrecke für die Kondensatpumpe unterhalb des Kondensators auf Schwierigkeiten stößt. Im vorliegenden Fall kann die Kondensatpumpe 25 auf dem gleichen Niveau angeordnet werden, wie die Einrichtung selbst.

Es versteht sich von selbst, daß hierbei abzuwägen ist, ob die erzielten baulichen Vorteile die zwangsläufig eintretende Verschlechterung des durch die Vakuumpumpe 24 erzeugten Unterdrucks rechtfertigen. Dieser Nachteil der vorgeschlagenen Anordnung kann aber auch durch andere Vorteile aufgewogen werden, beispielsweise dann, wenn zur besseren Abtrennung der über Leitung 17 abzuführenden, nicht kondensierbaren Bestandteile von dem über Leitung 13 abzuführenden Kondensat eine zusätzliche « Entgasungsstrecke » erforderlich ist.

Wie eingangs erläutert, ist die großtechnische Anwendung der bei einigen Flüssigkeitstrennproblemen sehr vorteilhaften Pervaporation vornehmlich daran gescheitert, daß keine Apparate zur Verfügung gestellt werden konnten, die den technischen und wirtschaftlichen Anforderungen entsprochen hätten. Überraschenderweise hat sich aber herausgestellt, daß mit der erfindungsgemäßen Einrichtung nicht nur alle Abdichtungs- und Korrosionsprobleme überwunden werden können, sondern daß sich derartige Einrichtungen auch mit wirtschaftlich durchaus vertretbarem Aufwand herstellen lassen. Die Verwendung handelsüblicher, beispielsweise für Plattenwärmetauscher entwickelter Platinen ist deswegen besonders vorteilhaft, weil sie in einer Vielzahl von Abmessung und Werkstoffen angeboten werden und es sich dabei um ein ausgesprochenes Massenprodukt handelt, dessen Herstellung völlig durchrationalisiert ist und das deswegen sehr preisgünstig ist.

Zunächst bestehende Bedenken, daß sich diese Bauart wegen zu hohen Flächenbedarfs bzw. zu hoher Druckverluste als Kondensator nicht eignet, haben sich nicht bestätigt. Die zur Kondensation des Permeats erforderlichen Kühlflächen sind in den meisten Fällen wesentlich kleiner als die für gegebene Trennaufgaben benötigten Membranflächen, so daß sich insgesamt « vernünftige » Baueinheiten ergeben, die sich insbesondere auch für eine Fertigung in großen Stückzahlen besonders gut eignen. Daß derartig aufgebaute Einrichtungen sehr einfach an die verschiedensten Anforderungen angepaßt werden können und in vielfältiger Weise mit anderen Aggregaten kombinierbar sind (vergl. Figur 2), bedarf keiner besonderen Erwägung. Selbstverständlich könnten auch Rekuperatoren oder Einrichtungen zur Vor- bzw. Zwischenerwärmung in Plattenbauweise ausgeführt und in die Baueinheit integriert werden. Für die meisten Fälle der Trennung von Flüssigkeitsgemischen durch Pervaporation ist es aber wirtschaftlicher, mit nicht integrierten Wärmetauschern zu arbeiten, weil sonst zu geringe Strömungsgeschwindigkeiten und entsprechend niedrige Wärmeübergangswerte in Kauf genommen werden müßten.

**Patentansprüche**

1. Einrichtung zur Trennung von Flüssigkeitsgemischen durch Pervaporation, mit einer Mehrzahl nach Art der Filterpressen oder Plattenwärmetauscher zusammengesetzter flächiger Bauteile, wobei jede Pervaporator-Einheit aus einer Rohmediumkammer und einer davon mittels dampfdurchlässiger Membran abgetrennter Permeatkammer besteht, dadurch gekennzeichnet, daß 2 bis 300 Pervaporator-Einheiten (2,3,4) zu einem Modul (18) parallel geschaltet sind, dem Modul (18) ein in gleicher Bauweise ausgeführter Kondensator (19) zugeordnet ist und daß Modul (18) und Kondensator (19) unter Zwischenlage von Dichtungen und Ausbildung randseitiger Verbindungs-, Zu- und Abfuhrkanälen mittels Abdeckplatten (1, 7) und Zugankern zu einer Baueinheit verbunden sind.

2. Einrichtung nach Anspruch 1, dadurch gekennzeichnet, daß der Kondensator (19) aus 1 bis 200 parallel geschalteten Kühl- und Kondensationskammern besteht.

3. Einrichtung nach Anspruch 1 oder 2, dadurch gekennzeichnet, daß mehrere Module (18,18',18") mit einem Kondensator (19) zu einer Baueinheit verbunden sind.

4. Einrichtung nach einem der Ansprüche 1 oder 3, dadurch gekennzeichnet, daß sie außerdem einen Rekuperator (9) und eine oder mehrere Heizeinrichtungen (10,10',10") aufweist.

5. Einrichtung nach einem der Ansprüche 1 bis 4, dadurch gekennzeichnet, daß alle Kammerwandungen aus Standardplatinen bestehen.

6. Einrichtung nach einem der Ansprüche 1 bis 5, ferner gekennzeichnet durch einen untenliegenden Kondensatauslauf (20), an dem ein sich etwa bis zum oberen Platinenrand erstreckendes Steigrohr (21) angeschlossen ist, das über einen oberen Rohrbogen (22) mit einem gekühlten Fallrohr (23) verbunden ist, wobei am oberen Rohrbogen ein Anschluß für die Vakuumpumpe (24) und am unteren Ende des Fallrohrs ein Anschluß für die Kondensatpumpe (25) vorgesehen ist.

7. Einrichtung nach Anspruch 6, dadurch gekennzeichnet, daß die Kondensatpumpe (25) auf dem gleichen Niveau angeordnet ist, wie die Einrichtung selbst.

**Claims**

1. Apparatus for separating liquid mixtures by pervaporation, comprising a plurality of platelike components, which are assembled to form a structure that is similar to a filter press or a plate heat exchanger, wherein each pervaporator cell comprises a raw fluid compartment and a permeate compartment, which are separated by a vapor-permeable diaphragm, characterized in that 2 to 300 pervaporator cells (2, 3, 4) are connected in parallel in a module (18), a condenser (19) of the same type as the module (18) is associated with the latter, and the module (18) and the condenser (19) are connected by means of cover plates (1, 7) and tie rods in a unit with suitable sealing elements interposed and with connecting, inlet and outlet passages formed at the edges.

2. Apparatus according to claim 1, characterized in that the condenser (19) consists of 1 to 200 cooling chambers, which are connected in parallel, and of 1 to 200 condensing chambers, which are connected in parallel.

3. Apparatus according to claim 1 or 2, characterized in that a plurality of modules (18, 18', 18") are combined in a unit with a condenser (19).

4. Apparatus according to any of claims 1 or 3, characterized in that it comprises also a recuperator (9) and one or more heating means (10, 10', 10").

5. Apparatus according to any of claims 1 to 4, characterized in that all walls which define the chambers consist of standard plates.

6. Apparatus according to any of claims 1 to 5, characterized in that the condenser is provided at its bottom with an outlet (20), which is succeeded by a pipe (21), which rises approximately to the top edge of the plates and is connected at its top by a pipe bend (22) to a cooled downcomer (23), a connection for a vacuum pump (24) is provided at the top pipe bend and a connection for a condensate pump (25) is provided at the lower end of the downcomer.

7. Apparatus according to claim 6, characterized in that the condensate pump (25) is provided on the same level as the apparatus.

## Revendications

1. Appareil de séparation de mélanges de liquides par évaporation à travers une membrane, comprenant un grand nombre d'éléments constitutifs plats assemblés à la manière de filtre-presses ou d'échangeurs à plaques, chaque unité d'évaporateur avec passage à travers une membrane étant constituée d'une chambre pour le milieu brut et d'une chambre pour le perméat qui en est séparée au moyen d'une membrane perméable à la vapeur, caractérisé en ce que de 2 à 300 unités d'évaporateur par passage à travers une membrane (2, 3, 4) sont montées en parallèle en un module (18), au module (18) est associé un condenseur (19) constitué suivant le même mode de construction, et en ce que le module (18) et le condenseur (19) sont reliés, avec interposition de garnitures d'étanchéité et constitution de canaux de liaison d'amenée et d'évacuation marginaux, en une unité modulaire, au moyen de plaques de recouvrement (1, 7) et de tirants.

2. Appareil suivant la revendication 1, caractérisé en ce que le condenseur est constitué de 1 à 200 chambres de refroidissement et de condensation montées en parallèle.

3. Appareil suivant la revendication 1 ou 2, caractérisé en ce que plusieurs modules (18, 18', 18") sont reliés à un condenseur (19) pour former une unité modulaire.

4. Appareil suivant l'une des revendications 1 ou 3, caractérisé en ce qu'il comprend, en outre, un récupérateur (9) et un ou plusieurs dispositifs de chauffage (10, 10', 10").

5. Appareil suivant l'une des revendications 1 à 4, caractérisé en ce que toutes les parois des chambres sont en platines standardisées.

6. Appareil suivant l'une des revendications 1 à 5, caractérisé en outre par une évacuation sous-jacente du condensat (20), à laquelle est raccordé un conduit ascendant (21) s'étendant à peu près jusqu'au bord supérieur des platines, et communiquant par un coude (22) supérieur avec un conduit descendant (23) refroidi, un raccord pour la pompe à vide (24) étant prévu sur le coude, et un raccord pour la pompe pour le condensat (25) étant prévu à l'extrémité inférieure du conduit descendant.

7. Appareil suivant la revendication 6, caractérisé en ce que la pompe pour le condensat (25) est disposée au même niveau que le dispositif lui-même.

**Fig.1**

# Fig.2

0 181 656